# EUROPEAN PATENT APPLICATION

(11) **EP 4 806 972 A1**
(43) Date of publication of application: **16.09.2026**
(21) Application number: 24888514.7
(22) Date of filing: 22.10.2024
(51) Int. Cl.: C09K 3/10, C08L 27/12, C08L 83/07

(54) **SEALING MATERIAL COMPOSITION AND SEALING MATERIAL**

(30) Priority: 10.11.2023 JP 2023192368
(71) Applicant: VALQUA, Ltd., Shinagawa-ku Tokyo 141-6024 (JP)
(72) Inventor: OSUMI, Naoki, Gojo-shi, Nara 637-0014 (JP); KINOSHITA, Hiromi, Gojo-shi, Nara 637-0014 (JP)
(74) Representative: Vossius & Partner Patentanwälte Rechtsanwälte mbB
(86) International application number: PCT/JP2024/037521
(87) International publication number: WO 2025/100216

(57) **Abstract**

The present disclosure relates to a sealing material composition including a fluoroelastomer, a silicone polymer having a vinyl group, and a crosslinking agent, a sealing material that contains a crosslinked product of the sealing material composition, a gate seal for semiconductor manufacturing equipment including the sealing material, and the semiconductor manufacturing equipment. According to the present disclosure, provided are a sealing material composition that can exhibit improved 100% modulus, a sealing material that contains a crosslinked product of the sealing material composition, a gate seal for semiconductor manufacturing equipment including the sealing material, and the semiconductor manufacturing equipment.

## Description

### TECHNICAL FIELD

The present invention relates to a sealing material composition, and further relates to a sealing material, and general sealing materials including a gate seal for semiconductor manufacturing equipment containing the same, and also to semiconductor manufacturing equipment.

### BACKGROUND ART

Japanese Patent Laying-Open No. 2000-119468 (PTL 1) proposes a composition that includes a crosslinkable fluorine-containing elastomer as a composition for producing sealing materials.

### CITATION LIST

### PATENT LITERATURE

PTL 1: Japanese Patent Laying-Open No. 2000-119468

### SUMMARY OF INVENTION

### TECHNICAL PROBLEM

However, sealing materials containing a crosslinked product of the composition that includes a fluoroelastomer may not have sufficient 100% modulus when used as dynamic sealing materials.

An object of the present invention is to provide a sealing material composition that can exhibit improved 100% modulus; a sealing material, and a gate seal for semiconductor manufacturing equipment, that contain a crosslinked product thereof; and the semiconductor manufacturing equipment.

### SOLUTION TO PROBLEM

The present invention provides a sealing material composition, a sealing material, a gate seal for semiconductor manufacturing equipment, and semiconductor manufacturing equipment as follows.
[1] A sealing material composition including a fluoroelastomer, a silicone polymer having a vinyl group, and a crosslinking agent.
[2] The sealing material composition according to [1], wherein the silicone polymer contains at least one selected from the group consisting of vinyl methyl silicone, fluoro vinyl methyl silicone, and phenyl vinyl methyl silicone.
[3] The sealing material composition according to [1] or [2], wherein a content of the silicone polymer is 1 part by mass or more and 500 parts by mass or less based on 100 parts by mass of the fluoroelastomer.
[4] The sealing material composition according to any one of [1] to [3], wherein the crosslinking agent contains at least one selected from the group consisting of a peroxide-based compound, a polyol-based compound, and a polyamine-based compound.
[5] The sealing material composition according to any one of [1] to [4], wherein a content of the crosslinking agent is 1 to 6 parts by mass based on 100 parts by mass of the fluoroelastomer.
[6] The sealing material composition according to any one of [1] to [5], further including a perfluoropolyether-based compound.
[7] The sealing material composition according to [6], wherein a content of the perfluoropolyether-based compound is 0.5 to 30 parts by mass based on 100 parts by mass of the fluoroelastomer.
[8] The sealing material composition according to any one of [1] to [7], further including 1 to 30 parts by mass of a filler based on 100 parts by mass of the fluoroelastomer.
[9] The sealing material composition according to [8], wherein the filler includes silica.
[10] The sealing material composition according to [8], wherein the filler includes a fluororesin and the fluororesin contains polytetrafluoroethylene.
[11] A sealing material including a crosslinked product of the sealing material composition according to any one of [1] to [10].
[12] A gate seal for semiconductor manufacturing equipment including the sealing material according to [11].
[13] Semiconductor manufacturing equipment including the sealing material according to [11].

### ADVANTAGEOUS EFFECTS OF INVENTION

According to the present invention, provided are a sealing material composition that can exhibit improved 100% modulus; a sealing material, and a gate seal for semiconductor manufacturing equipment, that contain a crosslinked product thereof; and the semiconductor manufacturing equipment.

### DESCRIPTION OF EMBODIMENTS

Hereinafter, embodiments of the present invention will be described, but the present invention will not be limited to the following embodiments.

### <Sealing Material Composition>

A sealing material composition according to an aspect of the present invention is a sealing material composition for producing a sealing material for semiconductor manufacturing equipment. The sealing material composition includes a fluoroelastomer, a silicone polymer having a vinyl group (hereinafter also referred to as a vinyl silicone), and a crosslinking agent.

### (Fluoroelastomer)

A fluoroelastomer is a crosslinkable rubber component capable of forming an elastomer (crosslinked rubber) that has a crosslinked structure through a crosslinking reaction, and it is composed of a polymer or copolymer where a monomer containing a hydrogen atom or both of a hydrogen atom and a fluorine atom is at least one of constituent units, or is a fluorine-based thermoplastic elastomer containing a hydrogen atom. The crosslinked rubber is produced by inducing a crosslinking reaction between the molecular chains of a crosslinkable rubber component (fluoroelastomer) using a crosslinking agent or the like, thereby imparting a crosslinked structure and enabling rubber elasticity.

Specific examples of the fluoroelastomer can include a vinylidene fluoride (VDF)-hexafluoropropylene (HFP) copolymer; a vinylidene fluoride (VDF)-hexafluoropropylene (HFP)-tetrafluoroethylene (TFE) copolymer; a tetrafluoroethylene (TFE)-propylene (Pr) copolymer; a vinylidene fluoride (VDF)-propylene (Pr)-tetrafluoroethylene (TFE) copolymer; an ethylene (E)-tetrafluoroethylene (TFE)-perfluoromethyl vinyl ether (PMVE) copolymer; vinylidene fluoride (VDF)-tetrafluoroethylene (TFE)-perfluoromethyl vinyl ether (PMVE) copolymer; and a vinylidene fluoride (VDF)-perfluoromethyl vinyl ether (PMVE) copolymer. The fluoroelastomer may be used in one type or in a combination of two or more types.

Mooney viscosity of the fluoroelastomer at a temperature of 121°C may be, for example, 20 or more. The Mooney viscosity of the fluoroelastomer at a temperature of 121°C is preferably 25 or more, more preferably 40 or more, and even more preferably 56 or more, from the viewpoint of ensuring good 100% modulus, elongation, and tensile strength of the resulting sealing material. The Mooney viscosity can be measured in accordance with JIS K6300-1:2013.

The fluorine-based thermoplastic elastomer containing a hydrogen atom is not particularly limited, and "DAI-EL Thermoplastics" (produced by DAIKIN INDUSTRIES, LTD.), "CEFRAL SOFT" (produced by Central Glass Co., Ltd.), and the like, which are product names for both, can be used, for example.

### (Silicone Polymer Having Vinyl Group)

A vinyl silicone can be a polymer or copolymer composed of constituent units derived from siloxane-based compounds. The vinyl silicone may have a vinyl group at any one of the main chain ends and the side chains, or it may have vinyl groups at all the main chain ends and the side chains. The vinyl silicone may have a ratio of vinyl groups among the end groups and side chains bonded to silicon atoms of, for example, 0.01 to 15 mol%. The vinyl silicone can be modified with, for example, halogen elements, and may have aromatic monovalent hydrocarbon groups. The degree of polymerization of vinyl silicone may be, for example, 100 or more, preferably 1000 or more, more preferably 2000 or more, and even more preferably 3000 or more. The degree of polymerization of vinyl silicone may be, for example, 10000 or less. The degree of polymerization can be determined, for example, as the number-average degree of polymerization in polystyrene equivalent using gel permeation chromatography (GPC) analysis using a developing solvent such as toluene.

The vinyl silicone may contain a constituent unit (a first constituent unit) represented by the following formula (1): 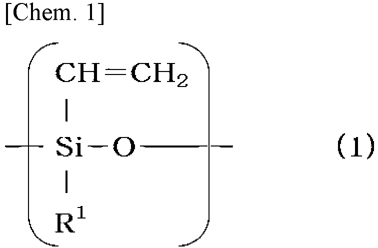 wherein
R¹ independently represents a substituted or unsubstituted aromatic monovalent hydrocarbon group, a substituted or unsubstituted unsaturated or saturated hydrocarbon group not containing an aromatic hydrocarbon group, an alkoxy group, a hydroxy group, or a hydrogen atom.
The vinyl silicone may contain one type or two or more types of the first constituent unit.

Examples of the unsubstituted aromatic monovalent hydrocarbon group include: aryl groups such as a phenyl group and a tolyl group; aralkyl groups such as a benzyl group and a phenylethyl group; and the like. The substituted and unsubstituted aromatic monovalent hydrocarbon group may be a group in which some or all the hydrogen atoms of the group exemplified as the above unsubstituted aromatic monovalent hydrocarbon group are substituted with halogen atoms such as fluorine and chlorine, and examples include a chlorophenyl group.

Examples of the unsubstituted saturated hydrocarbon group not containing an aromatic hydrocarbon group include alkyl groups such as a methyl group, an ethyl group, a propyl group, an isopropyl group, a butyl group, an isobutyl group, a tert-butyl group, a pentyl group, a hexyl group, a cyclohexyl group, an octyl group, a decyl group, and a dodecyl group. Examples of the unsubstituted unsaturated hydrocarbon group not containing an aromatic hydrocarbon group include alkenyl groups such as a vinyl group, an allyl group, a propenyl group, an isopropenyl group, a butenyl group, and an isobutenyl group. The substituted unsaturated or saturated hydrocarbon group not containing an aromatic hydrocarbon group may be a group in which some or all of the hydrogen atoms of the group exemplified as the above unsubstituted unsaturated or saturated hydrocarbon group not containing an aromatic hydrocarbon group are substituted with halogen atoms such as fluorine and chlorine, and examples include a chloromethyl group and a 3,3,3-trifluoropropyl group.

Examples of the alkoxy group include a methoxy group, an ethoxy group, a propoxy group, and a butoxy group.

The vinyl silicone may contain a constituent unit (hereinafter also referred to as a second constituent unit) represented by the following formula (2): 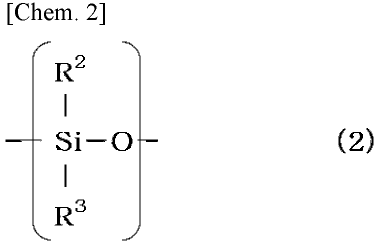 wherein
R² and R³ each independently represent an unsubstituted or substituted aromatic monovalent hydrocarbon group, an unsubstituted or substituted unsaturated or saturated hydrocarbon group not containing an aromatic hydrocarbon group, an alkoxy group, a hydroxy group, or a hydrogen atom,
however, neither R² nor R³ is a vinyl group.
The vinyl silicone may contain one type or two or more types of the second constituent unit.

As examples of the unsubstituted or substituted aromatic monovalent hydrocarbon group, the unsubstituted or substituted unsaturated or saturated hydrocarbon group not containing an aromatic hydrocarbon group, and the alkoxy group, in R² and R³, the examples described above except for the vinyl group are applied.

The vinyl silicone may have a group represented by (R⁴)₃Si-R⁵- at a main chain end (hereinafter also referred to as an end group), wherein R⁴ each independently represent an unsubstituted or substituted aromatic monovalent hydrocarbon group, an unsubstituted or substituted unsaturated or saturated hydrocarbon group not containing an aromatic hydrocarbon group, an alkoxy group, or a hydroxy group; and R⁵ independently represents an oxygen atom or an alkylene group having 1 to 5 carbon atoms. As examples of the unsubstituted or substituted aromatic monovalent hydrocarbon group, the unsubstituted or substituted unsaturated or saturated hydrocarbon group not containing an aromatic hydrocarbon group, and the alkoxy group in R⁴, the examples described above are applied. Examples of the alkylene group having 1 to 5 carbon atoms in R⁴ include a methylene group, an ethylene group, and a propylene group. R⁴ is preferably a methyl group, a methoxy group, and a hydroxy group. R⁵ is preferably an oxygen atom and an ethylene group. When the vinyl silicone has a vinyl group at a main chain end, at least one of R4 is a vinyl group.

The vinyl silicone may be preferably a compound represented by the following formula (3): 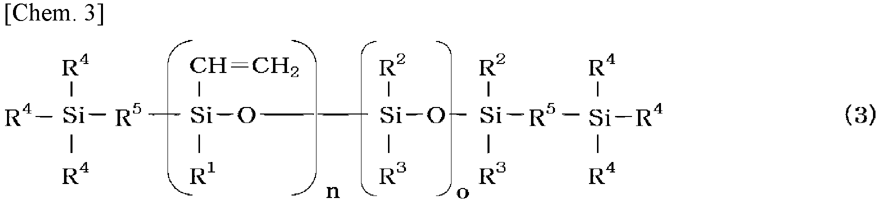 wherein
R¹, R², R³, R⁴, and R⁵ are as defined above, and
n and o each independently represent an integer of 1 or more.
The total of n and o may be, for example, 100 or more, preferably 1000 or more, more preferably 2000 or more, and even more preferably 3000 or more. The total of n and o may be, for example, 10000 or less.

The vinyl silicone may be more preferably:
a compound represented by the following formula (4): 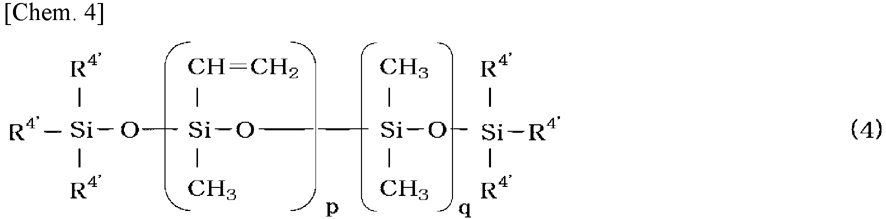
wherein
   R^{4'} each independently represent an unsubstituted or substituted unsaturated or saturated hydrocarbon group not containing an aromatic hydrocarbon group, an alkoxy group, or a hydroxy group, and
   p and q each independently represent an integer of 1 or more;
a compound represented by the following formula (5): 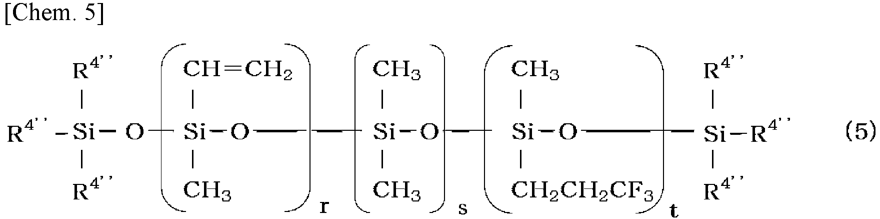
wherein
   R^{4"} each independently represent an unsubstituted or substituted unsaturated or saturated hydrocarbon group not containing an aromatic hydrocarbon group, an alkoxy group, or a hydroxy group, and
   r, s, and t each independently represent an integer of 1 or more; and
a compound represented by the following formula (6): 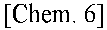 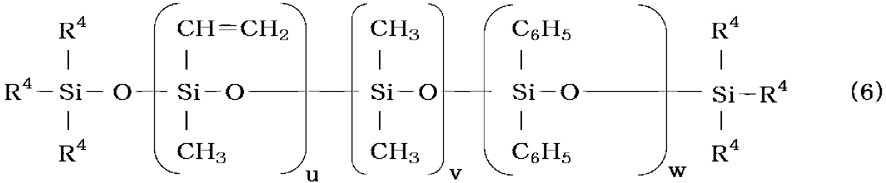
wherein
   R⁴ is as defined above, and
   u, v, and w each independently represent an integer of 1 or more.
   In formula (4), as an unsubstituted unsaturated or saturated hydrocarbon group not containing an aromatic hydrocarbon group, an alkoxy group, and a hydroxy group in R^{4'}, the definition of the above R⁴ is applied. In formula (5), as an unsubstituted or substituted unsaturated or saturated hydrocarbon group not containing an aromatic hydrocarbon group, an alkoxy group, and a hydroxy group in R^{4"}, the definition of the above R⁴ is applied. The total of p and q in formula (4), the total of r, s, and t in formula (5), and the total of u, v, and w in formula (6) are each, for example, 100 or more, preferably 1000 or more, more preferably 2000 or more, and even more preferably 3000 or more. The total of p and q in formula (4), the total of r, s, and t in formula (5), and the total of u, v, and w in formula (6) may be each, for example, 10000 or less.

The vinyl silicone may be a polymer or copolymer containing the first constituent unit. The vinyl silicone can be obtained, for example, by polymerizing a polymerizable component containing the first constituent unit. Alternatively, the vinyl silicone can be obtained by copolymerizing a copolymerizable component containing the first constituent unit with other copolymerizable components (e.g., a copolymerizable component containing the second constituent unit, and the like). For example, the compound represented by formula (6) can be obtained by copolymerizing, a dimethylsiloxane-based copolymer component, a diphenylsiloxane-based copolymer component, and a methylvinylsiloxane-based copolymer component.

The vinyl silicone preferably contains at least one selected from the group consisting of vinyl methyl silicone, fluoro vinyl methyl silicone, and phenyl vinyl methyl silicone. Examples of the vinyl methyl silicone include compounds represented by formula (4). Examples of the fluoro vinyl methyl silicone include compounds represented by formula (5). Examples of the phenyl vinyl methyl silicone include compounds represented by formula (6). These vinyl silicones can also be used in the form of silica-filled silicone rubber compounds, which will be described later. Examples of commercially available products thereof include: "KE-186-U", "KE-183-U", and "KE-136Y-U"; and "SE-955-U" produced by Dow Toray Co., Ltd.

The sealing material composition may include one type only or two or more types of silicone polymer having a vinyl group. The sealing material composition may also include other polysiloxane-based compounds, such as dimethyl silicone, in addition to the silicone polymer having a vinyl group. It is preferable that all silicone polymers included in the sealing material composition be silicone polymers having a vinyl group. In addition, it is used as a blended rubber with other rubbers within a range that does not impair the object of the present invention.

A content of the silicone polymer is, for example, 1 part by mass or more and 500 parts by mass or less based on 100 parts by mass of the fluoroelastomer. When the content of the silicone polymer is within the above range, 100% modulus of the resulting sealing material tends to improve easily. The content of the silicone polymer is preferably 5 to 500 parts by mass, more preferably 5 to 100 parts by mass, even more preferably 5 to 50 parts by mass, and particularly preferably 5 to 30 parts by mass, from the viewpoint of the 100% modulus. In addition, the content of the silicone polymer is preferably 25 parts by mass or less, more preferably 1 part by mass or more and 25 parts by mass or less, and even more preferably 2 parts by mass or more and 25 parts by mass or less, from the viewpoint of achieving both 100% modulus and elongation of the resulting sealing material.

### (Crosslinking Agent)

As a crosslinking agent, used can be at least one selected from the group consisting of peroxide-based compounds, polyol-based compounds, and polyamine-based compounds, for example. The peroxide-based compound is not particularly limited as long as it can be used for the silicone polymer, and examples include benzoyl peroxide, p-chlorobenzoyl peroxide, 2,4-dichlorobenzoyl peroxide, di-tert-butyl peroxide, tert-butylcumyl peroxide, dicumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexin-3, 1,3-di(tert-butylperoxyisopropyl)benzene, 2,5-dimethyl-2,5-di(benzoylperoxy)hexane, tert-butylperoxybenzoate, tert-butylperoxyisopropyl carbonate, and n-butyl-4,4-di(tert-butylperoxy)valerate. The vulcanizing agent may contain one type or two or more types of peroxide-based compounds.

Examples of the polyol-based compounds include 2,2-bis(4-hydroxyphenyl)propane (bisphenol A), 2,2-bis(4-hydroxyphenyl)perfluoropropane (bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (bisphenol B), 4,4-bis(4-hydroxyphenyl)valeric acid, 2,2-bis(4-hydroxyphenyl)tetrafluorodichloropropane, 4,4-dihydroxydiphenylsulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, etc. The crosslinking agent may contain one type or two or more types of the polyol-based compounds.

Examples of the polyamine-based compounds include hexamethylenediamine carbamate, N,N'-dicinnamylidene-1,6-hexamethylenediamine, and 4,4'-bis(aminocyclohexyl)methane carbamate. Among these, as polyamine compounds (b-2), N,N'-dicinnamylidene-1,6-hexamethylenediamine and the like are shown from the viewpoint of the crosslinkability of thermoplastic fluororesin (A) and the physical properties of the resulting crosslinked product, particularly its compression set property. The crosslinking agent may contain one type or two or more of polyamine-based compounds.

A content of the crosslinking agent in the sealing material composition may be, for example, 0.5 to 6 parts by mass based on 100 parts by mass of the fluoroelastomer, and is preferably 1.5 to 4 parts by mass, and more preferably 2 to 4 parts by mass.

### (Perfluoropolyether-Based Compound)

The sealing material composition may further include a perfluoropolyether-based compound. The perfluoropolyether-based compound may be a low molecular weight compound such as an oligomer, or a high molecular weight compound such as a polymer. In particular, the perfluoropolyether-based polymer is preferably included from the viewpoint of the 100% modulus and plasma resistance. The perfluoropolyether-based polymer may have a group capable of crosslinking reaction with the silicone polymer at a main chain end, for example. A commercially available perfluoropolyether-based polymer can be used. Examples of commercially available perfluoropolyether-based polymer include SIFEL8070A/B, X71-906 (both are produced by Shin-Etsu Chemical Co., Ltd.). A content of the perfluoropolyether-based compound in the sealing material composition may be, for example, 0.5 to 30 parts by mass based on 100 parts by mass of the fluoroelastomer, and is preferably 1 to 25 parts by mass, and more preferably 2 to 20 parts by mass.

### (Other Components)

The sealing material composition may include other components in addition to the above components, for example, additives such as a pigment, a filler, an anti-aging agent, an antioxidant, a vulcanization accelerator, a processing aid (such as stearic acid), a stabilizer, a tackifier, a silane coupling agent, a plasticizer, a flame retardant, a mold release agent, waxes, and a lubricant. Other examples of the additives include a stick-reducing (preventing) agent such as a fluorine-based oil (e.g., perfluoroether and the like). The additives may be used in one type only or in a combination of two or more types.

Examples of the pigment include at least one selected from the group consisting of an inorganic pigment and an organic pigment. Examples of the inorganic pigment include a white pigment (e.g., silica, zinc flower, lead white, lithopone, titanium dioxide, precipitated barium sulfate, and baryta powder), a red pigment (e.g., lead red and iron oxide red), a yellow pigment (e.g., lead yellow and zinc yellow), a blue pigment (e.g., ultramarine blue, Prussian blue, and YInMn blue), and a black pigment (e.g., carbon black). Examples of the organic pigment include an azo pigment (such as an azo lake pigment, an insoluble azo pigment, and a condensed azo pigment); a polycyclic pigment such as an anthraquinone-based pigment, a thioindigo-based pigment, a perinone-based pigment, a perylene-based pigment, a quinacridone-based pigment, an isoindolinone pigment, an isoindoline pigment, a dioxazine pigment, a quinophthalone pigment, and a diketopyrrolopyrrole pigment; and a phthalocyanine-based pigment. An organic pigment classified as a pigment in the color index may be used. Preferably an organic pigment containing no metal element is used. The organic pigment containing no metal element has no risk of scattering substances derived from the metal element, when the sealing material is used in harsh ozone environments such as semiconductor applications and even when an annular sealing material is etched. When the sealing material composition includes the pigment, a content of the pigment in the sealing material composition may be, for example, 0.05 to 3 parts by mass based on 100 parts by mass of the fluoroelastomer.

Examples of the filler include silica, quartz powder, clay, talc, diatomaceous earth, barium sulfate, mica, graphite, aluminum hydroxide, aluminum silicate, calcium silicate, hydrotalcite, calcium oxide, titanium oxide, zinc oxide, iron oxide, alumina, magnesium carbonate, calcium carbonate, zinc carbonate, carbon black, a granular or powdered resin (such as fluororesin), a metal powder, a glass powder, and a ceramic powder. When the sealing material composition includes a filler, it is advantageous from the viewpoint of improving the mechanical strength of the sealing material. The filler is preferably at least one selected from the group consisting of silica, carbon black and fluororesin. The filler preferably includes the silica and the fluororesin from the viewpoint of the 100% modulus and the plasma resistance.

Examples of the silica include fumed silica, precipitated silica, and fused silica. When the sealing material composition includes silica, a content of the silica in the sealing material composition may be, for example, 6 to 120 parts by mass based on 100 parts by mass of the fluoroelastomer. When the sealing material composition includes silica, a silicone rubber compound in which silica is blended into the silicone polymer may be used. As the silicone rubber compound, "KE-186-U" produced by Shin-Etsu Chemical Co., Ltd., "SE-955-U" produced by Dow Toray Co., Ltd., and the like can be also used as is. In addition, it is also used as a rubber blended with another rubber within a range that does not impair the object of the present invention.

Examples of the carbon black include MT carbon. Preferably, the sealing material composition does not contain a metallic filler from the viewpoint of filler scattering during use in semiconductor manufacturing equipment. When the sealing material composition includes carbon black, a content of the carbon black in the sealing material composition may be, for example, 1 to 30 parts by mass based on 100 parts by mass of the fluoroelastomer.

When the filler includes a fluororesin, the filler can be contained in the sealing material composition, for example, as fluororesin particles. When the filler includes the fluororesin, a content of the filler including the fluororesin in the sealing material composition may be, for example, 1 to 30 parts by mass based on 100 parts by mass of the fluoroelastomer.

The fluororesins used for the filler including fluororesin are resins containing fluorine atoms within their molecules, and examples thereof can include polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-ethylene copolymer (ETFE), polychlorotrifluoroethylene (PCTFE), chlorotrifluoroethylene-ethylene copolymer (ECTFE), polyvinylidene fluoride (PVDF), polyvinyl fluoride (PVF), vinylidene fluoride-hexafluoropropylene copolymer (VDF-HFP copolymer), and vinylidene fluoride-hexafluoropropylene-tetrafluoroethylene copolymer (VDF-HFP-TFE copolymer). The fluororesin can be used in one type only or in a combination of two or more types.

Among the above, from the viewpoint of preventing the resin from damaging the properties such as compression set by melting in high temperature environments, it is preferable to use fluororesins that have relatively high melting points, such as PFA and PTFE.

The fluororesin used as a filler may contain a functional group. The functional group can be introduced, for example, by copolymerizing monomers having the functional group. When the crosslinking site monomer described above is copolymerized as a monomer having a functional group, crosslinking between the fluororesin and the perfluoroelastomer also proceeds through the above crosslinking agent, and thereby it is possible to further increase the mechanical strength of a crosslinked product of the sealing material composition. Examples of the fluororesin containing a functional group can include a nitrile group-containing polytetrafluoroethylene described in Japanese Patent Laying-Open No. 2013-177631. In addition, the fluororesin may be a modified fluororesin, such as "TFM-modified PTFE" (produced by Dyneon Co., Ltd.).

When the sealing material composition includes a silicone polymer and a filler of fluororesin, as a method for kneading the silicone polymer and the fluororesin, for example: 1) a method for kneading the silicone polymer and the fluororesin using a mixing roll; or 2) a method for melt-kneading the silicone polymer and the fluororesin using an apparatus such as a mixer or twin-screw extruder, can be used.

When the sealing material composition includes a filler, a content of the filler in the sealing material composition (a total content in the case of including 2 or more types) may be, for example, 1 to 160 parts by mass based on 100 parts by mass of the fluoroelastomer, and is preferably 1 to 100 parts by mass, and more preferably 1 to 80 parts by mass.

The sealing material composition can be prepared by uniformly kneading a fluoroelastomer, a silicone polymer, a crosslinking agent, and further a pigment, silica, and the like added as required. As kneading machines, conventionally known machines such as a mixing roll, a pressure kneader, and an internal mixer (Banbury mixer) can be used. Each blending component may be mixed and kneaded all at once, or may be kneaded in a plurality of stages such that components other than those contributing to a crosslinking reaction (a crosslinking accelerator, a crosslinking retarder, a crosslinking agent, or the like) are kneaded earlier and then the components contributing to the crosslinking reaction are kneaded.

The sealing material of the present invention includes a crosslinked product of the sealing composition described above. The sealing material can be produced by crosslinking (vulcanizing) and molding a rubber composition for the sealing material. As a method for crosslinking and molding, conventionally known methods such as injection molding, compression molding, and transfer molding can be adopted.

A heating temperature (primary crosslinking temperature) at a molding may be, for example, 100°C or more and 220°C or less, and a heating time (primary crosslinking time) may be, for example, 0.5 minutes or more and 120 minutes or less. After vulcanization molding, secondary crosslinking may be performed. A secondary crosslinking temperature may be, for example, 120°C or more and 280°C or less, and a secondary crosslinking time may be, for example, 0.5 hours or more and 24 hours or less.

After primary crosslinking or secondary crosslinking, further crosslinking may be performed by irradiating the sealing material with radiation. Electron beans or gamma rays may be preferably used as radiation. An amount of irradiation may be, for example, 20 to 120 kGy, and is preferably 40 to 60 kGy.

The 100% modulus (MPa) of the sealing material may be, for example, 1 to 12 MPa, and is preferably 2 to 5 MPa. The above range of the hardness allows the sealing material to improve the ease of installation into semiconductor manufacturing equipment and facilitate enhanced sealing performance.

Hardness (type A durometer hardness) of the sealing material may be, for example, 54 or more, and is preferably 60 to 90. The above range of the hardness allows the sealing material to improve the ease of installation into semiconductor manufacturing equipment and facilitate enhanced sealing performance.

Tensile strength (MPa) of the sealing material may be, for example, 3 to 24 MPa, and is preferably 5 to 19 MPa.

Elongation (%) of the sealing material may be, for example, 100 to 400% or more, and is preferably 180 to 280, and more preferably 180 to 250.

The 100% modulus (MPa), the hardness, the tensile strength (MPa), and the elongation (%) of the sealing material can be performed in accordance with the methods described later in the Example columns.

Another aspect of the present invention is a sealing material that includes a crosslinked product of the above sealing material composition. The sealing material of the present invention may be a sealing material for semiconductor manufacturing equipment and is suitable as a gate seal for a vacuum chamber in semiconductor manufacturing equipment, particularly as a gate seal for a vacuum chamber in semiconductor manufacturing equipment where plasma processing is performed. Examples of the type of usage of the sealing material include various sealing materials such as rings, packings, and gaskets.

Another aspect of the present invention is semiconductor manufacturing equipment that includes the above sealing material. In the semiconductor manufacturing equipment of the present invention, for example, a liquid crystal panel manufacturing apparatus, a plasma panel manufacturing apparatus, a plasma display panel manufacturing apparatus, a plasma address liquid crystal panel manufacturing apparatus, an organic EL panel manufacturing apparatus, a field emission display panel manufacturing apparatus, a solar cell substrate manufacturing apparatus, and a semiconductor transport apparatus are included in addition to a semiconductor manufacturing apparatus.

### EXAMPLES

Hereinafter, the present invention will be described in more detail with reference to Examples. Unless otherwise indicated, "%" and "parts" in Examples refer to % by mass and parts by mass, respectively.

### <Examples 1 to 24, Comparative Examples 1 to 3, and Reference Examples 1 to 2>

According to the following procedure, a sealing material composition was prepared and then a sealing material was produced. First, according to the blending compositions shown in Table 1 to Table 5 (the unit of the amounts blended in Tables is parts by mass), predetermined amounts of each blending agent were kneaded using an open roll.

Then, the resulting sealing material composition was press-molded under a condition of 120°C for 20 minutes and then subjected to secondary crosslinking by heat under a condition of 200°C for 4 hours to obtain a sealing material.

In Example 11, further, the sealing material was irradiated with gamma rays at 40 KGy to perform irradiation crosslinking.

**[Table 1]**

| | Example 1 | Example 2 | Example 3 | Example 4 | Example 5 | Example 6 |
|---|---|---|---|---|---|---|
| Fluoroelastomer 1 | 100 | 100 | - | - | 100 | 100 |
| Fluoroelastomer 2 | - | - | 100 | 100 | - | - |
| Silicone Polymer 1 | 9 | 16 | 11 | 25 | - | - |
| Silicone Polymer 2 | - | - | - | - | 11 | 25 |
| Crosslinking Agent 1 | 2 | 2 | 2 | 2 | 2 | 2 |
| Co-crosslinking Agent | 4 | 4 | 4 | 4 | 4 | 4 |
| Hardness | 61 | 65 | 57 | 60 | 66 | 69 |
| Tensile Strength | 13.3 | 15.6 | 14.4 | 15.8 | 10.1 | 11.8 |
| Elongation | 220 | 250 | 280 | 280 | 200 | 230 |
| 100% Modulus | 3.0 | 3.4 | 1.7 | 2.1 | 3.5 | 3.9 |

| | | | | | | |
|---|---|---|---|---|---|---|
| [0058] Details of the blending components in Table 1 are as follows. Fluoroelastomer 1: vinylidene fluoride (VDF)-hexafluoropropylene (HFP)-tetrafluoroethylene (TFE) copolymer, "DAI-EL G-912" produced by DAIKIN INDUSTRIES, LTD. (Mooney viscosity at 121°C: 56) Fluoroelastomer 2: vinylidene fluoride (VDF)-hexafluoropropylene (HFP)-tetrafluoroethylene (TFE) copolymer, "TECNOFLON P459" produced by Solvay Japan Inc. (Mooney viscosity at 121°C: 24) Silicone Polymer 1: fluoro vinyl methyl silicone, "FE-251-U" produced by Shin-Etsu Chemical Co., Ltd. Silicone Polymer 2: vinyl methyl silicone, "KE-931-U" produced by Shin-Etsu Chemical Co., Ltd. Crosslinking Agent 1: 2,5-dimethyl-2,5-di(t-buthylperoxy)hexane, "PERHEXA 25B" produced by NOF CORPORATION Co-crosslinking Agent: triallylisocyanurate (TAIC), "TAIC" produced by Mitsubishi Chemical Corporation | | | | | | |

**[Table 2]**

| | Example 7 | Example 8 | Example 9 | Example 10 | Example 11 |
|---|---|---|---|---|---|
| Fluoroelastomer 1 | 100 | 100 | 100 | 100 | 100 |
| Silicone Polymer 3 | 1 | 10 | 20 | 10 | 10 |
| Crosslinking Agent 1 | 2 | 2 | 2 | 2 | 2 |
| Co-crosslinking Agent | 4 | 4 | 4 | 6 | 4 |
| Hardness | 57 | 67 | 85 | 67 | 70 |
| Tensile Strength | 12.6 | 17.0 | 5.0 | 3.6 | 13.0 |
| Elongation | 250 | 270 | 110 | 250 | 170 |
| 100% Modulus | 1.5 | 3.7 | 4.7 | 16.4 | 5.0 |

| | | | | | |
|---|---|---|---|---|---|
| [0060] Details of the blending components in Table 2 are as follows. Fluoroelastomer 1: vinylidene fluoride (VDF)-hexafluoropropylene (HFP)-tetrafluoroethylene (TFE) copolymer, "DAI-EL G-912" produced by DAIKIN INDUSTRIES, LTD. (Mooney viscosity at 121°C: 56) Silicone Polymer 3: phenyl vinyl methyl silicone, "KE-186-U" produced by Shin-Etsu Chemical Co., Ltd. Crosslinking Agent 1: 2,5-dimethyl-2,5-di(t-buthylperoxy)hexane, "PERHEXA 25B" produced by NOF CORPORATION Co-crosslinking Agent: triallylisocyanurate (TAIC), "TAIC" produced by Mitsubishi Chemical Corporation | | | | | |

**[Table 3]**

| | Example 12 | Example 13 | Example 14 | Example 15 | Example 16 | Example 17 | Example 18 |
|---|---|---|---|---|---|---|---|
| Fluoroelastomer 1 | 100 | 100 | 100 | 100 | 100 | 100 | 100 |
| Silicone Polymer 3 | 10 | 10 | 10 | 10 | 10 | 10 | 10 |
| Crosslinking Agent 1 | 2 | 2 | 2 | 2 | 2 | 2 | 2 |
| Co-crosslinking Agent | 4 | 4 | 4 | 4 | 4 | 4 | 4 |
| PFPE1 | 15 | - | - | - | - | - | - |
| PFPE2 | - | 1 | 2 | 10 | - | - | - |
| PFPE3 | - | 1 | 2 | 10 | - | - | - |
| PFPE4 | - | - | - | - | 2 | 4 | 20 |
| Hardness | 64 | 62 | 62 | 54 | 63 | 54 | 62 |
| Tensile Strength | 15.8 | 12.8 | 9.8 | 4.8 | 17.3 | 12.4 | 11.3 |
| Elongation | 230 | 240 | 210 | 180 | 250 | 240 | 240 |
| 100% Modulus | 3.3 | 2.6 | 2.5 | 1.7 | 3.6 | 2.7 | 1.8 |

| | | | | | | | |
|---|---|---|---|---|---|---|---|
| Details of the blending components in Table 3 are as follows. Fluoroelastomer 1: Vinylidene fluoride (VDF)-hexafluoropropylene (HFP)-tetrafluoroethylene (TFE) copolymer, "DAI-EL G-912" produced by DAIKIN INDUSTRIES, LTD. (Mooney viscosity at 121°C: 56) Silicone Polymer 3: phenyl vinyl methyl silicone, "KE-186-U" produced by Shin-Etsu Chemical Co., Ltd. Crosslinking Agent 1: 2,5-dimethyl-2,5-di(t-buthylperoxy)hexane, "PERHEXA 25B" produced by NOF CORPORATION Co-crosslinking Agent: triallylisocyanurate (TAIC), "TAIC" produced by Mitsubishi Chemical Corporation PFPE1: millable-type perfluoropolyether-based compound, "X71-906" produced by Shin-Etsu Chemical Co., Ltd. PFPE2: perfluoropolyether-based compound, "SIFEL8070A" produced by Shin-Etsu Chemical Co., Ltd. PFPE3: perfluoropolyether-based compound, "SIFEL8070B" produced by Shin-Etsu Chemical Co., Ltd. PFPE4: gel-type perfluoropolyether-based compound (a reactant of "SIFEL8070A" and "SIFEL8070B" produced by Shin-Etsu Chemical Co., Ltd.) | | | | | | | |

**[Table 4]**

| | Example 19 | Example 20 | Example 21 | Example 22 | Example 23 | Example 24 |
|---|---|---|---|---|---|---|
| Fluoroelastomer 1 | 100 | 100 | 100 | 100 | 100 | 100 |
| Silicone Polymer 3 | 10 | 10 | 10 | 10 | 10 | 10 |
| Crosslinking Agent 1 | 2 | 2 | 2 | 2 | 2 | 2 |
| Co-crosslinking Agent | 4 | 4 | 4 | 4 | 4 | 4 |
| PFPE4 | - | - | - | - | 4 | 20 |
| Filler 1 | 2 | 8 | 20 | - | 4 | 2 |
| Filler 2 | - | - | - | 15 | - | - |
| Hardness | 66 | 73 | 90 | 73 | 72 | 62 |
| Tensile Strength | 17.5 | 17.3 | 15.2 | 16.0 | 15.7 | 11.3 |
| Elongation | 250 | 230 | 200 | 220 | 220 | 240 |
| 100% Modulus | 4.0 | 6.4 | 9.5 | 5.3 | 5.2 | 2.3 |

| | | | | | | |
|---|---|---|---|---|---|---|
| Details of the blending components in Table 4 are as follows. Fluoroelastomer 1: vinylidene fluoride (VDF)-hexafluoropropylene (HFP)-tetrafluoroethylene (TFE) copolymer, "DAI-EL G-912" produced by DAIKIN INDUSTRIES, LTD. (Mooney viscosity at 121°C: 56) Silicone Polymer 3: phenyl vinyl methyl silicone, "KE-186-U" produced by Shin-Etsu Chemical Co., Ltd. Crosslinking Agent 1: 2,5-dimethyl-2,5-di(t-buthylperoxy)hexane, "PERHEXA 25B" produced by NOF CORPORATION Co-crosslinking Agent: triallylisocyanurate (TAIC), "TAIC" produced by Mitsubishi Chemical Corporation PFPE4: gel-type perfluoropolyether-based compound (a reactant of "SIFEL8070A" and "SIFEL8070B" produced by Shin-Etsu Chemical Co., Ltd.) Filler 1: Silica (SiO₂), "AEROSIL RX200" produced by NIPPON AEROSIL CO., LTD. Filler 2: fluororesin particles (PTFE), "LUBRON L-5" produced by DAIKIN INDUSTRIES, LTD. | | | | | | |

**[Table 5]**

| | Comparative Example 1 | Comparative Example 2 | Comparative Example 3 | Reference Example 1 | Reference Example 2 |
|---|---|---|---|---|---|
| Fluoroelastomer 1 | 100 | 100 | - | - | - |
| Fluoroelastomer 2 | - | - | 100 | - | - |
| Silicone Polymer 2 | - | - | - | 100 | - |
| Silicone Polymer 3 | - | - | - | - | 100 |
| Crosslinking Agent 1 | 2 | 2 | 2 | - | - |
| Crosslinking Agent 2 | - | - | - | 1 | - |
| Crosslinking Agent 3 | - | - | - | - | 1 |
| Co-crosslinking Agent | 4 | 4 | 4 | - | - |
| PFPE4 | 20 | - | - | - | - |
| Hardness | 51 | 55 | 56 | 71 | 63 |
| Tensile Strength | 9.8 | 7.2 | 8.8 | 8.8 | 11.2 |
| Elongation | 230 | 210 | 240 | 260 | 630 |
| 100% Modulus | 1.1 | 1.4 | 1.2 | 3.3 | 1.4 |

| | | | | | |
|---|---|---|---|---|---|
| Details of the blending components in Table 5 are as follows. Fluoroelastomer 1: vinylidene fluoride (VDF)-hexafluoropropylene (HFP)-tetrafluoroethylene (TFE) copolymer, "DAI-EL G-912" produced by DAIKIN INDUSTRIES, LTD. (Mooney viscosity at 121°C: 56) Fluoroelastomer 2: vinylidene fluoride (VDF)-hexafluoropropylene (HFP)-tetrafluoroethylene (TFE) copolymer, "TECNOFLON P459" produced by Solvay Japan Inc. (Mooney viscosity at 121°C: 24) Silicone Polymer 2: vinyl methyl silicone, "KE-931-U" produced by Shin-Etsu Chemical Co., Ltd. Silicone Polymer 3: phenyl vinyl methyl silicone, "KE-186-U" produced by Shin-Etsu Chemical Co., Ltd. Crosslinking Agent 1: 2,5-dimethyl-2,5-di(t-buthylperoxy)hexane, "PERHEXA 25B" produced by NOF CORPORATION Crosslinking Agent 2: 2,5-dimethyl-2,5-bis(t-buthylperoxy)hexane, "C-8" produced by Shin-Etsu Chemical Co., Ltd. Crosslinking Agent 3: para-methylbenzoyl peroxide, "C-23" produced by Shin-Etsu Chemical Co., Ltd. Co-crosslinking Agent: triallylisocyanurate (TAIC), "TAIC" produced by Mitsubishi Chemical Corporation PFPE4: gel-type perfluoropolyether-based compound (a reactant of "SIFEL8070A" and "SIFEL8070B" produced by Shin-Etsu Chemical Co., Ltd.) | | | | | |

### (Evaluation of Sealing Material)

On the resulting crosslinked molded products (sealing materials), the following evaluations were performed. The results are shown in Table 1 to Table 6.

### [1] Measurement of Normal State Physical Properties

Hardness (type A durometer hardness) was measured in accordance with JIS K 6253:2012 using a type A durometer hardness tester. Tensile tests were performed in accordance with JIS K 6251 using a Shopper-type tensile testing machine with a specimen shape of No. 3 dumb-bell to measure tensile strength (MPa), elongation (%), and 100% modulus (MPa).

As shown in Tables 1 to 5, it was confirmed that the 100% moduli of Examples 1 to 24 were improved compared with Comparative Examples 1 to 3.

## Claims

1. A sealing material composition comprising a fluoroelastomer, a silicone polymer having a vinyl group, and a crosslinking agent.

2. The sealing material composition according to claim 1, wherein the silicone polymer contains at least one selected from the group consisting of vinyl methyl silicone, fluoro vinyl methyl silicone, and phenyl vinyl methyl silicone.

3. The sealing material composition according to claim 1 or 2, wherein a content of the silicone polymer is 1 part by mass or more and 500 parts by mass or less based on 100 parts by mass of the fluoroelastomer.

4. The sealing material composition according to any one of claims 1 to 3, wherein the crosslinking agent contains at least one selected from the group consisting of a peroxide-based compound, a polyol-based compound, and a polyamine-based compound.

5. The sealing material composition according to any one of claims 1 to 4, wherein a content of the crosslinking agent is 1 to 6 parts by mass based on 100 parts by mass of the fluoroelastomer.

6. The sealing material composition according to any one of claims 1 to 5, further comprising a perfluoropolyether-based compound.

7. The sealing material composition according to claim 6, wherein a content of the perfluoropolyether-based compound is 0.5 to 30 parts by mass based on 100 parts by mass of the fluoroelastomer.

8. The sealing material composition according to any one of claims 1 to 7, further comprising 1 to 30 parts by mass of a filler based on 100 parts by mass of the fluoroelastomer.

9. The sealing material composition according to claim 8, wherein the filler comprises silica.

10. The sealing material composition according to claim 8, wherein the filler comprises a fluororesin and the fluororesin contains polytetrafluoroethylene.

11. A sealing material comprising a crosslinked product of the sealing material composition according to any one of claims 1 to 10.

12. A gate seal for semiconductor manufacturing equipment comprising the sealing material according to claim 11.

13. Semiconductor manufacturing equipment comprising the sealing material according to claim 11.
